# EUROPEAN PATENT SPECIFICATION

(11) **EP 1 790 956 B1**
(45) Date of publication and mention of the grant of the patent: **23.12.2020**
(21) Application number: 05111282.9
(22) Date of filing: 25.11.2005
(51) Int. Cl.: G01F 25/00, B67D 7/08, B67D 7/22, G01F 3/10

(54) **Fuel dispensing assembly with volume flow sensor and backup memory for storing calibration data for correcting the flow signal**
Kraftstoffabgabeeinheit mit Durchflussmesser und Backup-Speicher für Kalibrations-Daten zur Korrektur des Durchfluss-Signals
Dispositif de distribution de carburant comprenant un capteur de débit volumétrique et une mémoire de sauvegarde de données de calibration pour corriger le signal de débit

(43) Date of publication of application: 30.05.2007
(73) Proprietor: Wayne Fueling Systems Sweden AB, 202 15 Malmö (SE)
(72) Inventor: Larsson, Bengt, 274 53 Skivarp (SE); Kristiansson, Per, 232 91 Arlöv (SE)
(74) Representative: AWA Sweden AB

(56) References cited:
- EP-A- 0 700 865
- EP-A- 1 361 191
- US-A- 6 029 232
- US-A- 6 092 410
- US-A1- 2003 018 440
- US-B1- 6 311 739
- SCHNEIDER H-J: "INTERKAMA 89: SENSORSYSTEME FUR DIE BETRIEBSMESSTECHNIK" AUTOMATISIERUNGSTECHNISCHE PRAXIS - ATP, OLDENBOURG INDUSTRIEVERLAG, MUNCHEN, DE, vol. 32, no. 2, 1 February 1990 (1990-02-01), pages 55-70, XP000125650 ISSN: 0178-2320

## Description

### Technical Field of the Invention

The present invention relates to an apparatus for determining the volume of fuel dispensed from a fuel dispensing unit. The apparatus comprises a measuring device configured to generate signals corresponding to a fuel flow rate when dispensing fuel, and a correction unit for correcting the signals.

### Background Art

There are several existing devices for determining the volume of fuel being dispensed from a fuel dispensing unit at a petrol station. Such a volume determining device must be able to carry out volume determination with a predetermined minimum accuracy for different flow rates when dispensing fuel, and for different volumes of fuel dispensed. To achieve this accuracy, the device must be adjusted/calibrated in manufacture and subsequently at regular intervals. Calibration data obtained during calibration are stored as correction data to be used for obtaining the minimum accuracy for volume determination.

US-A-6,721,669 discloses a device for measuring the volumetric flow of fuel in a fuel dispensing unit. The device consists of a screw spindle counter in the form of two intermeshing wormdrive screw spindles that rotate when fuel passes through the screw spindle counter. One of the spindles carries a magnet, and rotation of the magnet as a result of the rotation of the screw spindle causes the generation of pulse-shaped measurement signals from a sensor element which cooperates with the magnet. The screw spindle structure often results in nonlinearity between the measurement signal and the actual volume flow. Also, due to manufacturing tolerances, screw spindle counters of the same structure generate different measurement signal frequencies or signal durations, even if the same flow of fuel is passing through the screw spindle counters. In addition, wear continuously changes the relationship between the measurement signal and the actual volume flow.

To achieve measurement accuracy, the signals are fed to a measuring transducer where signal correction takes place, whereby a correction factor depending on the fuel flow rate to be measured is sued. For this purpose, the measurement signal frequency is determined as a measure of the flow rate. Relating to a plurality of measurement signal frequency values, corresponding correction factors are stored in a table within the transducer. Using the appropriate correction factor for the corresponding cycle frequency, the transducer derives counter signals corresponding to the actual flow of fuel, and feeds these to a fuel volume counter. The correction data are generated and stored when calibrating the screw spindle counter.

WO 98/20307 discloses another device for measuring the volumetric flow of fuel in a fuel dispensing unit. This device comprises pistons being displaced when fuel passes through the device. A magnet is associated with the pistons and rotates when the pistons are displaced, and this rotation causes the generation of pulse-shaped measurement signals from a sensor element which cooperates with the magnet. The device has a structure where magnet rotation frequency is substantially constant, independent of the fuel flow rate passing through the device, resulting in a substantially linear relationship between the measurement signal and the actual volume flow.

However, due to manufacturing tolerances and continuous wear, piston displacement devices of the same structure have different relationships between the measurement signal and the actual volume flow. To achieve measurement accuracy, the signals are fed to a measuring transducer where signal correction takes place. The transducer derives counter signals by applying fix correction factors, and feeds the counter signals to a fuel volume counter. Calibration of the device is carried out at regular intervals to update the correction factors.

A problem associated with the above devices is that loss of correction data results in the fuel dispensing unit being unable to deliver a correct amount of fuel. This loss of data may occur due to software failures, memory device failure and other system failures. Moreover, when a malfunctioning transducer is replaced with a new one, the new transducer does not have the appropriate correction data in its memory, since correction data are individual for every fuel flow measuring unit. To load correction data in a transducer, a common method is to connect a portable PC to a signal input of the transducer and to transfer the appropriate correction data from the PC to the transducer. This means that correction data for all flow measuring units being manufactured must be stored on, for example, a data server belonging to the manufacturer of the measuring unit. In addition, when a measuring unit is calibrated, the resulting updated correction data must be stored on a data server.

This is a cumbersome and labor intensive process which also involves electrical devices (the PC) with voltages being undesirable high in a close vicinity of a fuel dispensing unit, were highly flammable gases are present.

US 6 311 739 B1, EP 0 700 865 A1, EP 1 361 191 A, US 2003/018440 A1 and US 6 092 410 disclose devices for determining a volume of fuel being dispensed, comprising a fuel flow rate sensor with a flow signal correction unit making use of correction data.

### Summary of the Invention

It is an object of the present invention to provide an improvement of the above techniques and prior art. A particular object is to provide a fuel dispensing unit for determining the volume of fuel being dispensed from the fuel dispensing unit, which apparatus is simple in structure, offers low production costs, high operational time and low maintenance.

A further particular object is to minimize costs and problems associated with loss or transfer of correction data for a measuring apparatus determining the flow of fuel and/or the volume of fuel being dispensed.

These objects are achieved by a fuel dispensing unit and a method having the features defined in appended claims 1 and 8, respectively. Preferred embodiments of the apparatus are defined in the subclaims.

The invention thus concerns a fuel dispensing unit for determining the volume of fuel dispensed from the fuel dispensing unit. It comprises a plurality of apparatuses comprising a measuring device configured to generate signals corresponding to a fuel flow rate when dispensing fuel, and a correction unit for correcting the signals by means of correction data associated with the apparatus and stored in a memory. Backup correction data associated with an apparatus are stored, for the purpose of data retrieval, in a backup memory of another of said apparatuses included in the fuel dispensing unit.

A general advantage of the fuel dispensing unit according to the invention is that it is very easy to recover correction data lost in the memory of such an apparatus. By storing the correction data in a backup memory, there is also an increased data protection in case of fuel dispensing unit system failure. Furthermore, the need for an external backup server is substantially reduced, and a service technician maintaining the apparatus and in need of missing correction data, does not have to retrieve the data from a remotely positioned data source.

The fuel dispensing unit may further comprise a barrier device for explosion protection, said barrier device disposed between such an apparatus and a fuel dispensing unit controller arranged in the fuel dispensing unit, thereby serving as an explosive protection barrier for flammable fuel.

The invention allows correction data to be recovered from a first apparatus and to be stored in a second apparatus having lost its correction data. The second apparatus is also an apparatus for determining the volume of fuel dispensed from the fuel dispensing unit, and both apparatuses are arranged within the same fuel dispensing unit. This allows data to be recovered for an apparatus, even if all data in all memories of the apparatus have been lost. For the purpose of identifying which apparatus the correction data belongs to, an identifier, such as apparatus manufacture number, associated with a specific apparatus, is stored together with the backup correction data for the same apparatus. As further described below, the identifier and corresponding correction data may also, and preferably, be associated with the measuring device of an apparatus.

Of course, multiple combinations of backup correction data storage are possible. For example, an apparatus may store backup correction data for several other of said apparatuses. Furthermore, the correction data for the second apparatus above could be stored in any of, for example, a memory of the first apparatus, and a memory of a correction unit of the first apparatus.

The memory and the backup memory may consist of individual memory units, but may also consist of data sections of the same memory unit, thereby facilitating versatile implementation of the correction data.

The correction data are preferably in the form of a table having a plurality of values corresponding to a plurality of measurement signals. Typically, the measurement signals are either pulse frequency signals or pulse duration signals, and the measurement signals are each associated with at least one correction value. In other words, the correction data may be in the form of a table having a plurality of values corresponding to a plurality of fuel flow rate values. This gives the advantage of fast and flexible data retrieval and storage.

In further detail, the correction data may be associated with the measuring device of the apparatus it belongs to, and the backup correction data may be associated with a measuring device included in another apparatus for determining the volume of fuel dispensed from the fuel dispensing unit. This is practical since, more specifically, it is typically the structure of the measuring device that causes the need of applying correction data.

According to the invention, the fuel dispensing unit comprises a plurality of such apparatuses wherein each apparatus has its associated correction data stored as backup correction data in a memory located in another apparatus.

In another aspect of the invention, there is also provided a method having the features defined in appended claim 8.

The fuel dispensing unit and the method according to the invention both have the same advantages as previously discussed.

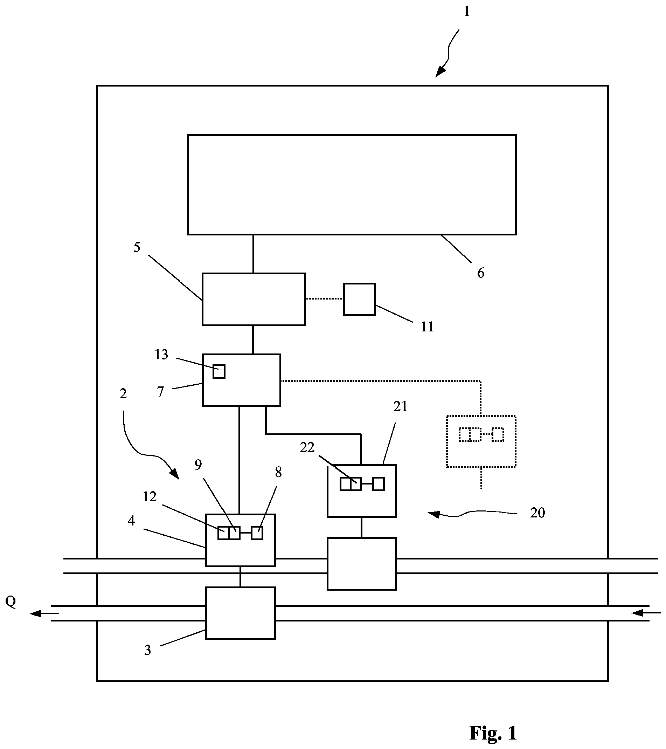

### Brief Description of the Drawing

Embodiments of the present invention will now be described, by way of example, with reference to the accompanying schematic drawing, which is a schematic figure of a fuel dispensing unit.

### Detailed Description of Preferred Embodiments of the Invention

The figure shows schematically how an apparatus 2 for determining the volume of fuel dispensed from a fuel dispensing unit 1 can be composed and arranged. The apparatus 2 is arranged within the dispensing unit 1 and comprises a measuring device 3 with a screw spindle counter (not shown) adapted to generate electronic pulses corresponding to the volume flow rate Q when dispensing fuel from the dispensing unit 1. The measuring device 3 is arranged between a pump device for pumping fuel from a fuel tank and a nozzle for dispensing fuel to a vehicle (not shown). The pulses are fed to a correction unit 4 having a correction controller 8 and a memory 9 where correction data are stored. The correction data are in the form of a table which contains a plurality of correction factors relating to different pulse durations or pulse repetition frequencies of measurement signals.

The correction controller 8 analyses pulses delivered by the measuring device 3 in respect of their duration or repetition frequency, and in this way determines the rotational frequency of the screw spindles. Based on the spindle rotation frequency, the correction controller 8 calls a correction factor from the correction data and applies a weighted number of pulses to a specific number of pulses received, so that counter pulses are generated corresponding to the actual volume of fuel flowing through the measuring device 3.

This correction process is necessary due to a nonlinear relationship between flow rate Q and spindle rotation frequency. Also, due to manufacturing tolerances, measuring devices of the same structure generate different measurement signals frequencies or signals durations, even if the same flow of fuel is passing through all measuring devices, resulting in a need for pulse correction. In addition, wear continuously changes the relationship between the measurement signal and the actual volume flow, which also results in a need for pulse correction.

It should be noted that the correction data are updated at regular intervals by calibration of the apparatus. The counter pulses (corrected pulses) are transferred to a fuel dispensing unit controller 5 which converts the counter pulses to a volume of dispensed fuel and a corresponding fuel cost, which volume and cost are displayed on the fuel dispensing unit head 6.

Since certain electric voltages are present in the fuel dispensing unit controller 5, an EExi barrier device 7 is preferably arranged between the fuel dispensing unit controller 5 and the correction unit 4 in order to provide explosion protection for flammable fuel in, for example, the measuring device 3. The EExi barrier device 7 is preferably an electronic device having a protective function in potentially explosive atmospheres, and its technical requirements are stipulated in Directive 94/9/EC (ATEX). The EExi barrier device 7 may also be a barrier device according to CENELEC standards, or according to any other suitable standard for providing the required protection. Instead of an EExi barrier device 7, an EExd, EExp, EExn or EExm barrier device may be used, or any other device providing similar functionality.

The correction data stored in the memory 9 can also be stored as backup correction data in i) a backup memory 11 of the fuel dispensing unit 1, ii) a backup memory 12 of the correction unit 4, iii) a memory 13 of the EExi barrier device 7, in addition to being stored in a memory 22 of a second apparatus 20. This storage of backup correction data is preferably conducted for all apparatuses present in the fuel dispensing unit 1. The dashed connection between the fuel dispensing unit controller 5 and the backup memory 11 of the fuel dispensing unit 1, represents the fact that the additional backup memory 11 may be located anywhere within the fuel dispensing unit 1, and may be connected to any unit capable of data communication as long as the backup correction data may be transferred from the backup memory 11 to the correction unit 4. It should be noted that a backup memory 11 does not need to be a separate physical unit, but may be a part of an existing memory device.

Generally, the backup correction data are stored only in the memory 22 of the second apparatus 20, which memory preferably is located in the correction unit 21 of the second apparatus 20. Of course, the second apparatus 20 also has it own associated correction data stored in a memory preferably arranged in its correction unit 21.

When manufacturing a fuel dispensing unit, typically two to six apparatuses are arranged inside the fuel dispensing unit. All of said apparatuses are, via an EExi barrier or the like, connected to the fuel dispensing unit controller and have their associated correction data stored in the memory of the respective correction unit. Furthermore, each apparatus has, in the respective correction unit, a backup memory storing a backup of correction data associated with another of the apparatuses in the fuel dispensing unit.

Correction data are stored in the memories by any known suitable means for data communication and storage. When any of the apparatuses or correction units looses its associated correction data, or when the correction unit must be replaced by a new one, a service technician readily transfers backup correction data from a neighboring apparatus to the apparatus or correction unit being in need of the data or being the replacement part. The transfer is accomplished by known means for suitable data transfer, for example, by a PC or by the fuel dispensing unit controller, via conventional means for data signal transfer.

An identifier is also stored with each correction data, hence making it possible to identify which apparatus or measuring device the correction data belongs to. Preferably, memory and backup memory are located on the same memory unit, thereby having different memory areas on the memory unit.

The memories are typically ROM, RAM, EPROM, EEPROM, OTP EPROM, and/or flash memory devices or any other suitable memory device. The memory may also be replaced by a new memory having correction data stored prior to its mounting in place.

The correction data must not always be in the form of a table, but may also be a mathematical function deriving correction factor(s) from, for example, pulse repetition frequencies.

## Claims

1. A fuel dispensing unit for dispensing fuel to a vehicle, comprising a plurality of apparatuses (2, 20) for determining the volume of fuel dispensed from the fuel dispensing unit (1), each of said apparatuses (2, 20) comprising
a measuring device (3) configured to generate signals corresponding to a fuel flow rate (Q) when dispensing fuel, and
a correction unit (4) for correcting the signals by means of correction data associated with the apparatus (2, 20) and stored in a memory,
**characterised in that** each apparatus (2, 20) for determining the volume of fuel dispensed from said fuel dispensing unit (1) has its associated correction data stored as backup correction data in a memory (22) located in another of said apparatuses (2, 20) for determining the volume of fuel dispensed from said fuel dispensing unit (1), for the purpose of data retrieval.

2. A fuel dispensing unit according to claim 1, wherein the backup correction data associated with said apparatus (2, 20) for determining the volume of fuel dispensed from said fuel dispensing unit (1) are stored in a memory (12) arranged in the correction unit (4) of another of said apparatuses (2, 20) for determining the volume of fuel dispensed from said fuel dispensing unit (1).

3. A fuel dispensing unit according to claim 1 or 2, further comprising a barrier device (7) for explosion protection, said barrier device (7) disposed between the apparatuses (2, 20) and a fuel dispensing unit controller (5) arranged in the fuel dispensing unit (1).

4. A fuel dispensing unit according to any one of claims ' 1-3, wherein the backup correction data are a copy of the correction data.

5. A fuel dispensing unit according to any one of claims 1-4, wherein the memory for the correction data and the memory for the backup correction data are parts of the same memory unit.

6. A fuel dispensing unit according to any one of claims 1-5, wherein the correction data are in the form of a table having a plurality of values corresponding to a plurality of measurement signals.

7. A fuel dispensing unit according to any one of claims 1-6, wherein the backup correction data are associated with a measuring device of said apparatus (2, 20) for determining the volume of fuel dispensed from said fuel dispensing unit (1).

8. A method of transferring correction data to an apparatus (2) configured to determine the volume of fuel dispensed from a fuel dispensing unit (1) to a vehicle, said apparatus (2) comprising a measuring device (3) configured to generate signals corresponding to a fuel flow rate (Q) when dispensing fuel, and a correction unit (4) for correcting the signals by means of the correction data associated with said apparatus (2) and stored in a memory (9), **characterised by** the steps of:
sending signals to said apparatus (2) indicating that correction data are to be loaded,
retrieving the correction data from a memory (22) located in another apparatus (20) comprising a measuring device (3) configured to generate signals corresponding to a fuel flow rate (Q) when dispensing fuel that is arranged in the fuel dispensing unit (1), and
storing the retrieved correction data in a memory (9) located in said apparatus (2).

## Patentansprüche

1. Kraftstoff-Abgabeeinheit zum Abgeben von Kraftstoff an ein Fahrzeug, die mehrere Vorrichtungen (2, 20) zum Bestimmen des Volumens an Kraftstoff, der aus der Kraftstoff-Abgabevorrichtung (1) abgegeben wird, umfasst, wobei jede der Vorrichtungen (2, 20) Folgendes umfasst:
eine Messeinrichtung (3), die dafür konfiguriert ist, Signale zu erzeugen, die einer Kraftstoff-Durchflussmenge (Q) entsprechen, wenn Kraftstoff abgegeben wird, und
eine Korrektureinheit (4) zum Korrigieren der Signale mit Hilfe von Korrekturdaten, die mit der Vorrichtung (2, 20) verknüpft und in einem Speicher gespeichert sind,
**dadurch gekennzeichnet, dass** jede Vorrichtung (2, 20) zum Bestimmen des Volumens an Kraftstoff, der aus der Kraftstoff-Abgabevorrichtung (1) abgegeben wird, ihre zugeordneten Korrekturdaten zum Zweck der Datenwiedergewinnung als Sicherungskorrekturdaten in einem Speicher (22) gespeichert hat, der sich in einer anderen der Vorrichtungen (2, 20) zum Bestimmen des Volumens an Kraftstoff, der aus der Kraftstoff-Abgabevorrichtung (1) abgegeben wird, befindet.

2. Kraftstoff-Abgabeeinheit nach Anspruch 1, wobei die Sicherungskorrekturdaten, die mit der Vorrichtung (2, 20) zum Bestimmen des Volumens an Kraftstoff, der aus der Kraftstoff-Abgabevorrichtung (1) abgegeben wird, verknüpft sind, in einem Speicher (12) gespeichert sind, der in der Korrektureinheit (4) einer anderen der Vorrichtungen (2, 20) zum Bestimmen des Volumens an Kraftstoff, der aus der Kraftstoff-Abgabevorrichtung (1) abgegeben wird, angeordnet ist.

3. Kraftstoff-Abgabeeinheit nach Anspruch 1 oder 2, die ferner eine Sperrvorrichtung (7) zum Explosionsschutz umfasst, wobei die Sperrvorrichtung (7) zwischen den Vorrichtungen (2, 20) und einer Kraftstoff-Abgabeeinheitssteuerung (5) angeordnet ist, die in der Kraftstoff-Abgabeeinheit (1) angeordnet ist.

4. Kraftstoff-Abgabeeinheit nach einem der Ansprüche 1 bis 3, wobei die Sicherungskorrekturdaten eine Kopie der Korrekturdaten sind.

5. Kraftstoff-Abgabeeinheit nach einem der Ansprüche 1 bis 4, wobei der Speicher für die Korrekturdaten und der Speicher für die Sicherungskorrekturdaten Teile der gleichen Speichereinheit sind.

6. Kraftstoff-Abgabeeinheit nach einem der Ansprüche 1 bis 5, wobei die Korrekturdaten in der Form einer Tabelle vorliegen, die mehrere Werte aufweist, die mehreren Messsignalen entsprechen.

7. Kraftstoff-Abgabeeinheit nach einem der Ansprüche 1 bis 6, wobei die Sicherungskorrekturdaten mit einer Messeinrichtung der Vorrichtung (2, 20) zum Bestimmen des Volumens an Kraftstoff, der aus der Kraftstoff-Abgabevorrichtung (1) abgegeben wird, verknüpft sind.

8. Verfahren zum Übertragen von Korrekturdaten zu einer Vorrichtung (2), die dafür konfiguriert ist, das Volumen an Kraftstoff, der aus einer Kraftstoff-Abgabevorrichtung (1) an ein Fahrzeug abgegeben wird, zu bestimmen, wobei die Vorrichtung (2) eine Messeinrichtung (3), die dafür konfiguriert ist, Signale zu erzeugen, die einer Kraftstoff-Durchflussmenge (Q) entsprechen, wenn Kraftstoff abgegeben wird, und eine Korrektureinheit (4) zum Korrigieren der Signale mit Hilfe der Korrekturdaten, die mit der Vorrichtung (2) verknüpft und in einem Speicher (9) gespeichert sind, umfasst, **gekennzeichnet durch** die folgenden Schritte:
Senden von Signalen an die Vorrichtung (2), die angeben, dass Korrekturdaten geladen werden sollen,
Abrufen der Korrekturdaten aus einem Speicher (22), der sich in einer anderen Vorrichtung (20) befindet, die eine Messeinrichtung (3) umfasst, die dafür konfiguriert ist, Signale zu erzeugen, die einer Kraftstoff-Durchflussmenge (Q) entsprechen, wenn Kraftstoff abgegeben wird, die in der Kraftstoff-Abgabevorrichtung (1) angeordnet ist, und
Speichern der abgerufenen Korrekturdaten in einem Speicher (9), der sich in der Vorrichtung (2) befindet.

## Revendications

1. Unité de distribution de carburant pour distribuer du carburant à un véhicule, comprenant une pluralité de dispositifs (2, 20) pour déterminer le volume de carburant distribué depuis l'unité de distribution de carburant (1), chacun desdits dispositifs (2, 20) comprenant
un dispositif de mesure (3) configuré pour générer des signaux correspondant à un débit de carburant (Q) lors de la distribution de carburant, et
une unité de correction (4) pour corriger les signaux au moyen de données de correction associées au dispositif (2, 20) et mémorisées dans une mémoire,
**caractérisé en ce que** chaque dispositif (2, 20) pour déterminer le volume de carburant distribué depuis ladite unité de distribution de carburant (1) a ses données de correction associées mémorisées en tant que données de correction de sauvegarde dans une mémoire (22) située dans un autre desdits dispositifs (2, 20) pour déterminer le volume de carburant distribué depuis ladite unité de distribution de carburant (1) à des fins de récupération de données.

2. Unité de distribution de carburant selon la revendication 1, dans laquelle les données de correction de sauvegarde associées audit dispositif (2, 20) pour déterminer le volume de carburant distribué depuis ladite unité de distribution de carburant (1) sont mémorisées dans une mémoire (12) disposée dans l'unité de correction (4) d'un autre desdits dispositifs (2, 20) pour déterminer le volume de carburant distribué depuis ladite unité de distribution de carburant (1).

3. Unité de distribution de carburant selon la revendication 1 ou 2, comprenant en outre un dispositif de barrière (7) pour la protection contre les explosions, ledit dispositif de barrière (7) étant disposé entre les dispositifs (2, 20) et un contrôleur d'unité de distribution de carburant (5) étant disposé dans l'unité de distribution de carburant (1).

4. Unité de distribution de carburant selon une quelconque des revendications 1-3, -Z dans laquelle
les données de correction de sauvegarde sont une copie des données de correction.

5. Unité de distribution de carburant selon une quelconque des revendications 1-4, dans laquelle la mémoire pour les données de correction et la mémoire pour la correction de sauvegarde les données font partie de la même unité de mémoire.

6. Unité de distribution de carburant selon une quelconque des revendications 1-5, dans laquelle les données de correction se présentent sous la forme d'un tableau ayant une pluralité de valeurs correspondant à une pluralité de signaux de mesure.

7. Unité de distribution de carburant selon une quelconque des revendications 1 à 6, dans lequel les données de correction de sauvegarde sont associées à un dispositif de mesure dudit dispositif (2, 20) pour déterminer le volume de carburant distribué par ladite unité de distribution de carburant (1).

8. Procédé de transfert de données de correction vers un dispositif (2) configuré pour déterminer le volume de carburant distribué à partir d'une unité de distribution de carburant (1) à un véhicule, ledit dispositif (2) comprenant un dispositif de mesure (3) configuré pour générer des signaux correspondant à un débit de carburant (Q) lors de la distribution de carburant, et une unité de correction (4) pour corriger les signaux par des moyens des données de correction associés audit dispositif (2) et mémorisés dans une mémoire (9), **caractérisé par** les étapes consistant à:
envoyer des signaux audit dispositif (2) indiquant que les données de correction doivent être chargées,
récupérer des données de correction à partir d'une mémoire (22) située dans le dispositif (20) comprenant un dispositif de mesure (3) configuré pour générer des signaux correspondant à un débit de carburant (Q) lors de la distribution de carburant qui est disposé dans l'unité de distribution de carburant (1), et
mémoriser des données de correction récupérées dans une mémoire (9) située dans ledit dispositif (2).
